Europäisches Patentamt

European Patent Office

Office européen des brevets

(11) Veröffentlichungsnummer: **0 486 850 A1**

# EUROPÄISCHE PATENTANMELDUNG

(21) Anmeldenummer: **91118404.2**

(22) Anmeldetag: **29.10.91**

(51) Int. Cl.5: **B60B 33/00**

(30) Priorität: **23.11.90 DE 4037256**

(43) Veröffentlichungstag der Anmeldung:
**27.05.92 Patentblatt 92/22**

(84) Benannte Vertragsstaaten:
**AT CH DE ES FR GB IT LI**

(71) Anmelder: **Wanzl GmbH & Co.
Entwicklungs-KG**

Postfach 11 29
**W-8874 Leipheim(DE)**

(72) Erfinder: **Wanzl, Rudolf**
**Sonnenweg 8**
**W-8874 Leipheim(DE)**
Erfinder: **Ertle, Karl**
**Pfarrsteig 19**
**W-7907 Langenau(DE)**

(54) Lenkrolle.

(57) Die Lenkrolle (1) weist ein einteiliges, aus Kunststoff gefertigtes Gehäuse (2) auf, in das ein Rillenkugellager (20) unverlierbar eingespritzt ist. Um die Stabilität des Gehäuses (2) und damit auch die Stabilität der Lenkrolle (1) zu erhöhen, sind innerhalb des Raumes (37), der sich zwischen dem Rillenkugellager (20) und dem Laufrad (29) befindet, Rippen (15, 16, 17) vorgesehen, die eine weitere Verbindung zwischen dem Gehäuse (2) und der das Rillenkugellager (20) umschließenden Wand (13) herstellen.

Fig. 1

EP 0 486 850 A1

Die Erfindung betrifft eine Lenkrolle mit einem einteiligen, aus Kunststoff bestehenden Gehäuse, in dem ein vom Gehäuse teilweise umschlossenes Laufrad angeordnet ist, das auf einer in den Längswänden des Gehäuses abgestützten Laufradachse drehbar gelagert ist und die Lenkrolle ein Rillenkugellager aufweist, das im Gehäuse unverlierbar eingesetzt ist, wobei die Längsachse des Rillenkugellagers senkrecht verläuft und in Seitenansicht betrachtet in einem Abstand zur Laufradachse angeordnet ist und das Rillenkugellager mit seinem Außenring zwischen einer ringförmigen unteren Schulter und einer ringförmigen oberen Schulter ortsfest gehalten und von einer Wand mantelförmig umfaßt wird und der Innenring des Rillenkugellagers über die obere Begrenzung des Gehäuses ragt.

Eine ähnliche Lenkrolle ist durch die deutsche Patentschrift 25 43 211 bekannt. Diese Lenkrolle ist für den Einsatz an von Hand bewegbaren Fahrzeugen, insbesondere Einkaufswagen bestimmt. Im Gegensatz zur Lenkrolle, die nachfolgend beschrieben ist, weist die eben zum Stand der Technik genannte Lenkrolle eine Radgabel und ein Lagergehäuse auf, die als einteiliges, aus Stahl gefertigtes Zieh- und Prägeteil gestaltet sind.
Ohne eine weitere Fundstelle zu nennen, sind vielfach Lenkrollen bekannt, deren das Laufrad tragende Gehäuse aus Kunststoff gefertigt ist.
Die Lenkrolle gemäß der eingangs genannten Patentschrift zeichnet sich durch hohe Stabilität aus, da die Radgabel und das Lagergehäuse aus einem einzigen Teil gefertigt sind. Diese Stabilität erweist sich beim rauhen Einsatz von Einkaufswagen als vorteilhaft.

Die Aufgabe der Erfindung besteht darin, eine Lenkrolle der gattungsgemäßen Art zu schaffen, die imstande ist, Belastungen jener Art schadlos aufzunehmen, wie sie bei für Einkaufswagen bestimmten Lenkrollen auftreten können.

Die Aufgabe ist durch den kennzeichnenden Teil des Anspruches 1 gelöst.

Der Vorteil der Erfindung besteht darin, daß der zwischen dem Laufrad und dem Rillenkugellager ungenutzte Raum dazu verwendet wird, Rippen vorzusehen, welche die Stabilität des Gehäuses erhöhen.
Ein weiterer Vorteil ist darin erkennbar, daß durch das Vorhandensein von Vertiefungen und/oder Erhebungen, die sich am Außenring des Rillenkugellagers befinden und welche die Oberfläche des Außenringes vergrößern, eine wesentlich stärkere Einbindung des Rillenkugellagers in das Gehäuse erzielt wird, so daß bedeutend höhere Kippkräfte, die auf das Rillenkugellager wirken, vom Gehäuse aufgenommen werden können. Die Gefahr, daß bei hoher Kippbelastung die obere ringförmige Schulter brechen könnte, wird dadurch erheblich reduziert.

Gemäß einer Ausgestaltung der Erfindung ist es zweckmäßig, den Außenring des Rillenkugellagers nach unten zu verlängern, um auftretende Kippkräfte ebenfalls schadlos aufzunehmen.

Ebenfalls entsprechend einer Variante oder Ausgestaltung der Erfindung ist es empfehlenswert, daß sich das Laufrad nicht nur an der Laufradachse, sondern auch noch radial und axial an Vertiefungen abstützt, die sich an den Innenseiten der Längswände befinden, wobei es zweckmäßig ist, an den Innenseiten einer jeden Längswand je eine von unten nach oben führende, je eine Vertiefung einbindende Rippe als Verstärkung vorzusehen.

Es wird ferner vorgeschlagen, an der Außenfläche des Gehäuses wenigstens eine, zumindest teilweise umlaufende und horizontal angeordnete Versteifungsrippe vorzusehen, welche die Stabilität des Gehäusekörpers erhöht und gleichzeitig Abweisfunktionen beim Anfahren der Lenkrolle an Gegenstände übernimmt.

Abschließend ist zu vermerken, daß die vorgeschlagene Lenkrolle in der Lage ist, wesentlich höhere Stoß-, Kipp-, Scher- und Biegekräfte aufzunehmen als jene aus Kunststoff gefertigten Lenkrollen, die nicht die erfindungswesentlichen Merkmale aufweisen.

Die Erfindung wird anhand von Ausführungsbeispielen näher erläutert. Es zeigt

Fig. 1    eine Lenkrolle im Längsschnitt bei dem nur die Laufradumrisse eingezeichnet sind;

Fig. 2    eine Unteransicht auf das Gehäuse der Lenkrolle im Schnitt;

Fig. 3    Die Lenkrolle in Vorderansicht im Schnitt mit den Umrissen des Laufrades;

Fig. 4    eine Seitenansicht des Gehäuses sowie

Fig. 5    eine weitere Variante einer Lenkrolle.

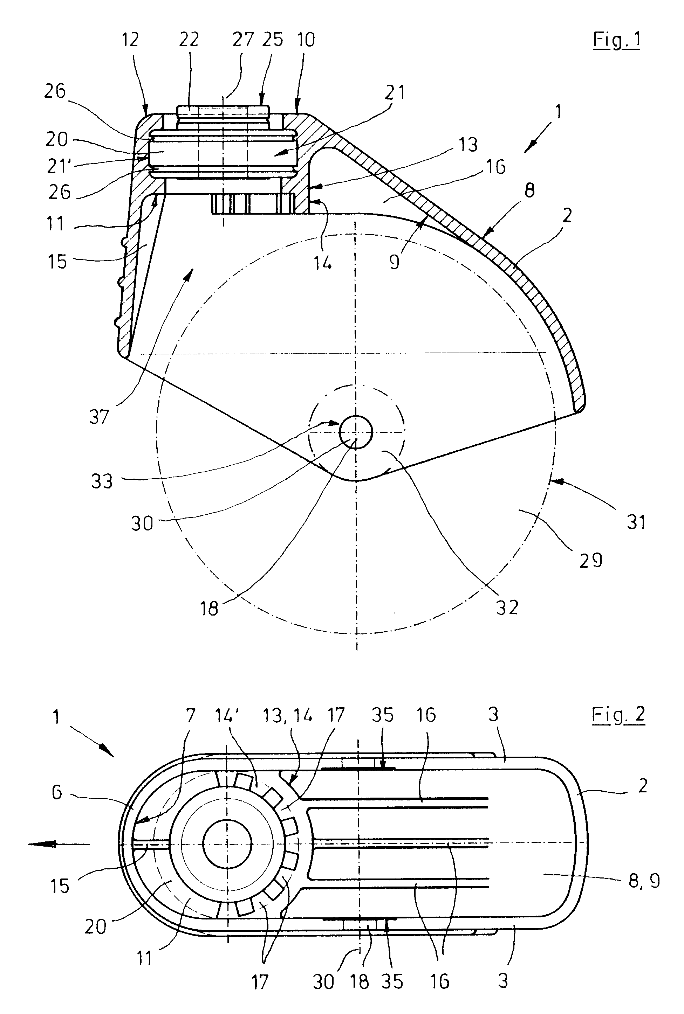

Die in Fig. 1 gezeigte, insbesondere für Einkaufswagen bestimmte Lenkrolle 1 besitzt ein aus Kunststoff gefertigtes, einteiliges Gehäuse 2. Das Gehäuse 2 ist in bekannter Weise haubenförmig gestaltet, so daß das im Gehäuse 2 auf einer Laufradachse 30 gelagerte Laufrad 29 teilweise umschlossen ist. Die Form des Gehäuses 2 ist länglich, wie dies in Fig. 2 ersichtlich ist. Außerhalb des Laufradumrisses, oberhalb der waagrecht angeordneten Laufradachse 30 und in einem seitlichen Abstand zu dieser ist ein aus Stahl gefertigtes Rillenkugellager 20 unverlierbar und ortsfest in das Gehäuse 2 eingespritzt. Der Außenring 21 des Rillenkugellagers 20 ist zwischen einer ringförmigen unteren Schulter 11 und einer ringförmigen oberen Schulter 12 eingefügt, wobei eine senkrechte Wand 13 den Außenring 21 mantelförmig umfaßt. Der Außenring 21 des Rillenkugellagers 20 läßt sich nicht bewegen, während der in bekannter Weise auf Kugeln gelagerte Innenring 22 nach beiden Richtungen gedreht werden kann. Die Längsachse 27 des Rillenkugellagers 20 ist senkrecht angeordnet, so daß sich die Lenkrolle 1 in bekannter Weise um eine vertikale Achse verschwenken läßt. Im Beispiel sind an der zylindrischen Mantelfläche 21' des Außenringes 21 zwei koaxial zur Längsachse 27 des Rillenkugellagers 20 angeordnete ringförmige Vertiefungen 26 oder äquivalente Erhebungen 26 vorgesehen, die von der Wand 13 beim Herstellvorgang des Gehäuses 2 ausgefüllt bzw. formschlüssig umfaßt werden. Anstelle von ringförmigen Vertiefungen 26 oder Erhebungen 26 können auch andere die Oberfläche des Außenringes vergrößernde Vertiefungen oder Erhebungen vorgesehen sein, welche die zylindrische Gestalt des Außenringes 21 verändern. Es bieten sich z.B. ungekrümmte Nuten, Einschnitte, Stege oder dgl. an, die beispielsweise senkrecht oder waagrecht angeordnet sein können. Dadurch wird neben einer hohen formschlüssigen Einbindung des Außenringes 21 in das Gehäuse 2 auch noch eine Erhöhung der Stabilität dieses Bereiches der Lenkrolle 1 erzielt. Der Innenring 22 des Rillenkugellagers 20 ragt über die obere Begrenzung 10 des Gehäuses 2, so daß die Lenkrolle 1, die obere Begrenzungsfläche 25 des Innenringes 22 als Anlagefläche benützend, z.B. an das Fahrgestell eines nicht näher dargestellten Einkaufswagens anschraubbar ist.

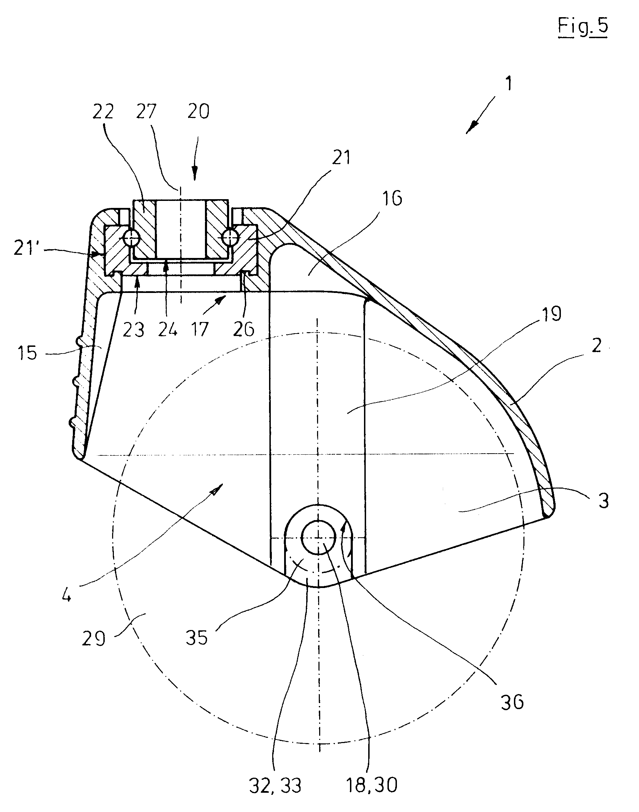

Die weitere Beschreibung der in Fig. 1 dargestellten Lenkrolle 1 erfolgt nunmehr zusammen mit Figur 2, welche die Lenkrolle 1 in einer Unteransicht zeigt. Das Gehäuse 2 weist eine längliche Form auf. Die Längswände 3 des Gehäuses 2 verlaufen parallel zur Laufrichtung (Pfeil) des Laufrades 29. Innerhalb des Gehäuses 2 und ausgehend von der Innenwand 7 der Stirnseite 6 des Gehäuses 2 ist wenigstens eine Rippe 15 vorgesehen, die zur unteren Schulter 11 geführt und an dieser angeformt ist. In Fig. 2 erkennt man deutlich, daß der Grundriß der wenigstens einen Rippe 15 in den Grundriß des strichpunktiert gezeichneten Grundrisses des Rillenkugellagers 20 ragt. Die Rippe 15 ist damit in der Lage, eine Abstützfunktion für alle vom Rillenkugellager 20 nach unten oder umgekehrt gerichteten Kräfte zu übernehmen. Sie schützt ferner die Stirnseite 6 des Gehäuses 2 vor Aufprallschäden. Ebenfalls innerhalb des Gehäuses 2, jedoch entgegengesetzt zur wenigstens einen Rippe 15 angeordnet ist wenigstens eine weitere Rippe 16 -im Beispiel sind es drei- vorgesehen, die ausgehend von der Wand 13 zur Innenwand 9 des Rückens 8 des Gehäuses 2 geführt und an diesen angeformt sind. Zusammen mit den beiden Längswänden 3 sind die Rippen 16 in der Lage, die zwischen dem Rillenkugellager 20 und dem Laufrad 29 und der Laufradachse 30 wirkenden Stoßkräfte aufzunehmen. Der an die Rippen 16 angrenzende Abschnitt 14 der Wand 13 ist ein Stück weit über die ringförmige untere Schulter 11 nach unten weitergeführt und umfaßt einen kreisabschnittförmigen Bereich 14' von mindestens 180°. Der Abschnitt 14 der Wand 13 mündet in weitere kleine, senkrecht angeordnete Rippen 17, die an die untere Schulter 11 angeformt, ebenfalls zur Verstärkung jenes Bereiches beitragen, der das Rillenkugellager 20 umgibt. Die Rippen 16 sind im Beispiel parallel zur Laufrichtung der Lenkrolle 1 angeordnet. Sie können auch spitzwinklig, also strahlenförmig angeordnet sein. Alle Rippen 15, 16, 17 sind in dem zwischen dem Laufrad 1 und dem Rillenkugellager 20 bisher ungenutzten Raum 37, siehe Fig. 1, angeordnet. In den Längswänden 3 und in einem nach unten gerichteten wesentlichen Abstand ist in bekannter Weise je eine Öffnung 18 zur Aufnahme der Laufradachse 30 vorgesehen. Das im Grunde verschieden gestaltbare Laufrad 29, siehe Fig. 1, weist eine Nabe 32 auf. Auf der Nabe 32 ist in bekannter Weise ein Laufring 31 drehbar gelagert. Nabe 32 und Laufring 31 bilden somit das Laufrad 29. Die Nabe 32 kann ein- oder mehrteilig gestaltet sein. Sie kann ferner beidseitig und koaxial zur Laufradachse 30 angeordnete Vorsprünge 33 aufweisen, die zum Einsetzen in Vertiefungen 35 bestimmt sind, wie in Fig. 5 beschrieben.

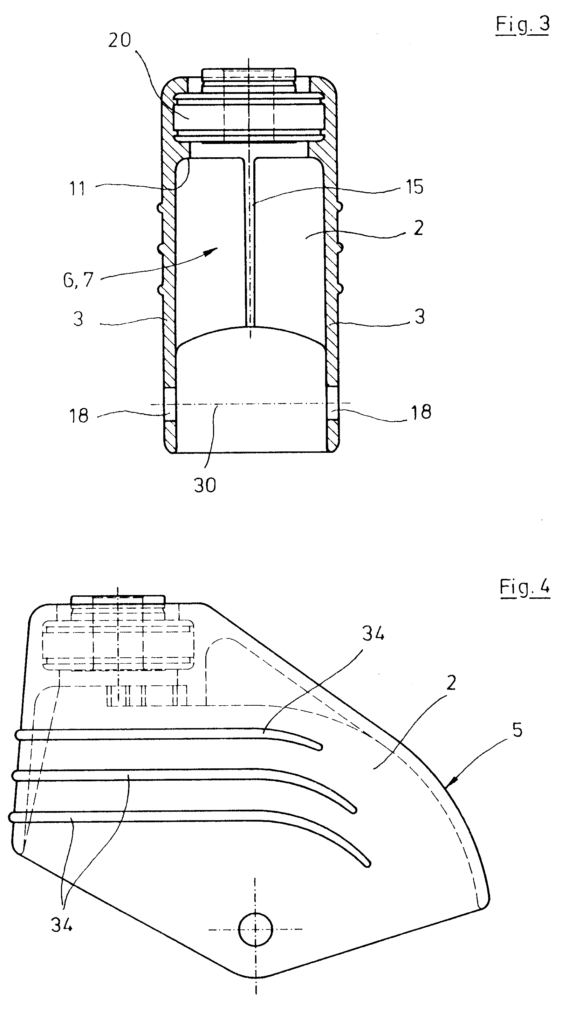

Fig. 3 zeigt das Gehäuse 2 in einem senkrechten, längs zur Laufradachse 30 angelegten Schnitt. Man erkennt die von der Innenwand 7 der Stirnseite 6 des Gehäuses 2 zur unteren Schulter 11 führende Rippe 15. Die Rippe 15 ist auf der vertikalen Mittelachse des Gehäuses 2 angeordnet. Dargestellt ist auch das Rillenkugellager 20. In den Längswänden 3 sind die beiden für die Aufnahme der Laufradachse 30 vorgesehenen Öffnungen 18 ebenfalls geschnitten dargestellt. Das Beispiel verdeutlicht, daß auf die kleinen Rippen 17 und damit auf das weitere Nachuntenführen des Abschnittes 14 der Wand 13 auch verzichtet werden kann. Es ist aus Gründen der Festigkeit jedoch zweckmäßig, die kleinen Rippen 17 beizubehalten.

Fig. 4 zeigt in einer Seitenansicht eine der vielen möglichen Formen, die für das Gehäuse 2 denkbar sind. Neu sind die zumindest teilweise umlaufend und größtenteils horizontal angeordneten Versteifungsrippen 34, die, bezogen auf die Außenfläche 5 des Gehäuses 2, erhaben angeordnet sind. Neben einer das Gehäuse 2 insgesamt versteifenden Funktion üben diese Versteifungsrippen 34 auch Abweisfunktionen dann aus, wenn man mit der Lenkrolle 1 an Gegenstände anfährt oder an diesen entlangstreift. Unschöne Stoß- oder Kratzspuren an der Oberfläche des Gehäuses 2 werden dadurch vermieden. Anstelle von mehreren Versteifungsrippen 34 kann auch nur eine Versteifungsrippe 34 vorgesehen sein.

Gemäß einer Variante zeigt Fig. 5 in Anlehnung an Fig. 1 eine weitere Lenkrolle 1. Die Einbindung des Rillenkugellagers 20 sowie die Anordnung und Anzahl der verschiedenen Rippen 15, 16, 17 können der in Fig. 1 beschriebenen Ausführung entsprechen. Um eine weitere Erhöhung der Festigkeit der gesamten Lenkrollenkonstruktion zu erzielen, wird vorgeschlagen, an der Innenseite 4 der Längswände 3 je eine nach unten offene Vertiefung 35 vorzusehen, welche die für die Aufnahme der Laufradachse 30 vorgesehenen, in den Längswänden 3 befindlichen Öffnungen 18 mit einschließen. Die Vertiefungen 35 bilden dann Schultern 36 für beidseitig an der Nabe 32 des Laufrades 29 angeordnete Vorsprünge 33, die je nach Gestaltung des Laufrades 29 an der Nabe 32 vorgesehen sein können, wobei jeder Vorsprung 33 nahezu formschlüssig in eine Vertiefung 35 eingefügt ist. Diese vorteilhafte Ausbildung von Nabe 32 und Vertiefungen 35 erlaubt ein sicheres Abstützen des Laufrades 29 an den Längswänden 3 sowohl in axialer als auch (mit Ausnahme nach unten) in radialer Richtung. Man könnte natürlich die für die Vorsprünge 33 der Nabe 32 gedachten Vertiefungen 35 auch kreisförmig gestalten, doch erschwert dies das Einsetzen des Laufrades 29 zwischen die Längswände 3 des Gehäuses 2. Es ist vorteilhaft, ausgehend von den Vertiefungen 35 an der Innenseite 4 einer jeden Längswand 3 eine weitere, nach oben führende Rippe 19 oder Verdickung vorzusehen, welche je eine Vertiefung 35 einschließt, so daß die derart gestalteten Längswände 3 imstande sind, Biege- und seitliche Schubkräfte problemlos aufzunehmen. Es ist ferner möglich, mit oder ohne Verzicht auf die in Fig. 1 und 2 beschriebenen kleinen Rippen 17 an der Unterseite 23 des Außenringes, und wie im Beispiel gezeigt, wenigstens eine ringförmige, koaxial zur Längsachse 27 des Rillenkugellagers 20 angeordnete ringförmige Vertiefung 26, oder eine entsprechende ringförmige Erhebung 26 vorzusehen, wobei die an der Mantelfläche 21' des Außenringes 21 entsprechend Fig. 1 vorgeschlagenen Vertiefungen 26 und/oder Erhebungen 26 ebenfalls vorgesehen sein können. Im Beispiel ist der Außenring 21 des Rillenkugellagers 20 über die Unterseite 24 des Innenringes 22 hinaus nach unten verlängert. Dadurch wird neben einer hohen formschlüssigen Einbindung des Außenringes 21 in das Gehäuse 2 auch noch eine Erhöhung der Stabilität dieses Bereiches der Lenkrolle 1 erzielt. Es ist aber auch möglich, die Unterseite 23 des Außenringes 21 der Unterseite 24 des Innenringes 22 auf einer gemeinsamen horizontalen Ebene gleichzusetzen, wie dies in Fig. 1 gezeigt ist.

In der Beschreibung wurde auf weitere Details, so die Befestigung der Laufradachse 30 an den Längswänden 3 oder die Befestigung der Lenkrolle 1 an einem Fahrzeug, beispielsweise an einem Einkaufswagen verzichtet, da diese Befestigungsarten bereits hinlänglich bekannt sind. Gleiches gilt für die äußere Form des Gehäuses 2, da diese sich an bereits bekannte Formen anlehnt. Die im Beispiel gezeigte Form des Gehäuses 2 erinnert an das Gehäuse einer in der deutschen Offenlegungsschrift 24 02 077 beschriebenen Möbelrolle.

**Patentansprüche**

1.  Lenkrolle mit einem einteiligen, aus Kunststoff bestehenden Gehäuse, in dem ein vom Gehäuse teilweise umschlossenes Laufrad angeordnet ist, das auf einer in den Längswänden des Gehäuses abgestützten Laufradachse drehbar gelagert ist und die Lenkrolle ein Rillenkugellager aufweist, das im Gehäuse unverlierbar eingesetzt ist, wobei die Längsachse des Rillenkugellagers senkrecht verläuft und in Seitenansicht betrachtet in einem Abstand zur Laufradachse angeordnet ist und das Rillenkugellager mit seinem Außenring zwischen einer ringförmigen unteren Schulter und einer ringförmigen oberen Schulter ortsfest gehalten und von einer Wand mantelförmig umfaßt wird und der Innenring des Rillenkugellagers über die obere Begrenzung des Gehäuses ragt, dadurch gekennzeichnet, daß am Außenring (21) des Rillenkugellagers (20) Vertiefungen (26) und/oder Erhebungen (26) vorgesehen sind, die von der Wand (13) ausgefüllt und/oder umfaßt werden und daß innerhalb des Gehäuses (2) wenigstens eine weitere Rippe (16) vorgesehen ist, die ausgehend von der Wand (13) zur Innenwand (9) des Rückens (8) des Gehäuses (2) geführt und an den Rücken (8) angeformt ist.

2.  Lenkrolle nach Anspruch 1, dadurch gekennzeichnet, daß die Vertiefungen (26) und/oder Erhebungen (26) ringförmig ausgebildet und koaxial zur Längsachse (27) des Rillenkugellagers (20) angeordnet sind oder daß die Vertiefungen (26) und/oder Erhebungen (26) als ungekrümmte Nuten, Einschnitte, Stege oder dgl. gestaltet sind.

3.  Lenkrolle nach Anspruch 1 und/oder 2, dadurch gekennzeichnet, daß innerhalb des Gehäuses (2) und unterhalb der unteren Schulter (11) wenigstens eine Rippe (15) vorgesehen ist, die ausgehend von der Innenwand (7) der Stirnseite (6) des Gehäuses (2) so weit zur unteren Schulter (11) geführt und an dieser angeformt ist, daß der Grundriß der Rippe (15) in den Grundriß des Rillenkugellagers (20) ragt.

4.  Lenkrolle nach einem oder mehreren der Ansprüche 1 bis 3, dadurch gekennzeichnet, daß der an die wenigstens eine Rippe (16) angrenzende Abschnitt (14) der Wand (13) über die ringförmige untere Schulter (11) hinaus nach unten weitergeführt ist und in kleine Rippen (17) mündet, die an die untere Schulter (11) angeformt sind.

5. Lenkrolle nach einem oder mehreren der Ansprüche 1 bis 4, dadurch gekennzeichnet, daß der Abschnitt (14) der Wand (13) einen kreisabschnittförmigen Bereich (14') von mindestens 180° umfaßt.

6. Lenkrolle nach einem oder mehreren der Ansprüche 1 bis 5, dadurch gekennzeichnet, daß an der Innenseite (4) der beiden Längswände (3) des Gehäuses (2) je eine Vertiefung (35) vorgesehen ist und die Vertiefungen (35) die beiden zur Aufnahme der Laufradachse (30) vorgesehenen Öffnungen (18) einschließen, wobei die Vertiefungen (35) zur teilweisen Aufnahme und zum radialen und axialen Abstützen der Nabe (32) des Laufrades (29) vorgesehen sind.

7. Lenkrolle nach einem oder mehreren der Ansprüche 1 bis 6, dadurch gekennzeichnet, daß die Rippen (15, 16 und 17) in dem zwischen dem Rillenkugellager (20) und dem Laufrad (29) befindlichen Raum (37) angeordnet sind.

8. Lenkrolle nach einem oder mehreren der Ansprüche 1 bis 7, dadurch gekennzeichnet, daß der Außenring (21) des Rillenkugellagers (20) über die Unterseite (24) des Innenringes (22) des Rillenkugellagers (20) hinaus nach unten verlängert ist.

9. Lenkrolle nach einem oder mehreren der Ansprüche 1 bis 8, dadurch gekennzeichnet, daß die Unterseiten (23, 24) von Außen- und Innenring (21, 22) des Rillenkugellagers (20) auf gleicher Ebene angeordnet sind.

10. Lenkrolle nach einem oder mehreren der Ansprüche 1 bis 9, dadurch gekennzeichnet, daß an der Unterseite (23) des Außenringes (21) eine koaxial zur Längsachse (27) des Rillenkugellagers (20) angeordnete ringförmige Vertiefung (26) oder Erhebung (26) vorgesehen ist.

11. Lenkrolle nach einem oder mehreren der Ansprüche 1 bis 10, dadurch gekennzeichnet, daß die Vertiefungen (35) entweder nach unten offen oder kreisförmig gestaltet sind.

12. Lenkrolle nach einem oder mehreren der Ansprüche 1 bis 11, dadurch gekennzeichnet, daß an der Innenseite (4) einer jeden Längswand (3) je eine von unten nach oben führende, je eine Vertiefung (35) einbindende Rippe (19) vorgesehen ist.

13. Lenkrolle nach einem oder mehreren der Ansprüche 1 bis 12, dadurch gekennzeichnet, daß zu beiden Seiten der Nabe (32) je ein koaxial zur Laufradachse (30) angeordneter Vorsprung (33) vorgesehen ist und jeder Vorsprung (33) zum Einfügen in je eine Vertiefung (35) bestimmt ist.

14. Lenkrolle nach einem oder mehreren der Ansprüche 1 bis 13, dadurch gekennzeichnet, daß an der Außenfläche (5) des Gehäuses (2) wenigstens eine, zumindest teilweise umlaufende, horizontal und erhaben angeordnete Versteifungsrippe (34) vorgesehen ist.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 167 763 (GUY-RAYMOND) | 1,2,6,7, 10,11, 12,13 | B60B33/00 |
| A | * Seite 2, Zeile 35 - Seite 3, Zeile 23; Abbildungen 4-7 *<br>--- | 3 | |
| Y | DE-A-2 019 867 (TENTE-ROLLEN) | 1,2,6,7, 10,11, 12,13 | |
| A | * Seite 11, Zeile 6 - Zeile 26; Abbildungen 1-4 *<br>--- | 9 | |
| A | FR-A-2 559 428 (ALBERT SCHULTE)<br><br>* Seite 7, Zeile 30 - Seite 8, Zeile 31; Abbildungen 1,2,4,7-16 *<br>--- | 1,2,3,5, 7 | |
| A | GB-A-2 184 349 (ALBERT SCHULTE SÖHNE)<br>* Seite 2, Zeile 18 - Zeile 52; Abbildungen 1,2 * | 1 | |
| | ----- | | **RECHERCHIERTE SACHGEBIETE (Int. Cl.5)**<br><br>B60B<br>F16C |

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1992 | AYITER I. |

EPO FORM 1503 03.82 (P0403)